Europäisches Patentamt

European Patent Office

Office européen des brevets

(11) Veröffentlichungsnummer: **0 076 865**
A1

(12) # EUROPÄISCHE PATENTANMELDUNG

(21) Anmeldenummer: 81108074.6

(22) Anmeldetag: 08.10.81

(51) Int. Cl.³: **B 23 Q 17/16,** B 23 Q 21/00

(43) Veröffentlichungstag der Anmeldung: 20.04.83
Patentblatt 83/16

(84) Benannte Vertragsstaaten: **AT BE CH DE FR GB IT LI LU NL SE**

(71) Anmelder: **Letzel, Helmut, Dünnwalder Mauspfad 382, D-5000 Köln 80 (DE)**

(72) Erfinder: **Letzel, Helmut, Dünnwalder Mauspfad 382, D-5000 Köln 80-Dünnwald (DE)**

(74) Vertreter: **Köhne, Friedrich, Dipl.-Ing., Postfach 250265 Lothringer Strasse 81, D-5000 Köln 1 (DE)**

(54) **Grenztaster zur Genaueinstellung von Wegesteuerungen für bewegte Maschinenteile.**

(57) Bei Grenztastern zur Genaueinstellung von Wegesteuerungen für bewegte Maschinenteile mit einem beweglichen Betätigungselement, welches mit einem der Wegesteuerung entsprechend angeordneten Nocken zusammenwirkt, bestehen bisher erhebliche Schwierigkeiten, das genaue Einstellen gewünschter Werte zu realisieren.

Um einen Grenztaster zu schaffen, welcher dem Bedienungspersonal das Herstellen bzw. Einstellen und Ablesen solcher genauen Werte wesentlich erleichtert, wird vorgeschlagen, das Betätigungselement mit einem Meßwertgeber zu verbinden, so daß das Bedienungspersonal die betreffenden Angaben leicht ablesen und so ein genaues Einstellen der Wegesteuerung vornehmen und die Maßangaben während der gesamten Fertigung einer Serie von Werkstücken laufend überwachen kann.

EP 0 076 865 A1

- 1 -

## Grenztaster zur Genaueinstellung von Wege-
## steuerungen für bewegte Maschinenteile

Die Erfindung bezieht sich auf einen Grenztaster
nach dem Oberbegriff des Anspruches 1.

Für die Steuerung von Maschinenbewegungen werden
in großem Umfang elektrische Schalter für die
Wegbegrenzung, für Umschaltungen und Signale angewendet. Für viele Vorgänge benutzt man sogenannte Grenztaster, die man zu mehreren zusammenfassen kann, so daß sich ein Mehrfachschalter,
auch Reihengrenztaster genannt, ergibt. Im allgemeinen sind mehrere Schalter bzw. Grenztaster in einer Reihe angeordnet. Diese Ausführung findet man besonders häufig im Werkzeugmaschinenbau, vor allem bei Fräsmaschinen und
Bohrwerken. Die Schlitten und Pinolen dieser
Maschinen sind vorzugsweise mit Mehrfach-Nutleisten ausgerüstet und mit Nocken bestückt,
welche die Schaltstößel der Grenztaster bzw.
Reihengrenztaster betätigen und dadurch Schaltungen veranlassen oder Signale abgeben. Bei
Wegbegrenzungen kommt es häufig auf hohe Genauigkeit an, welche eine genaue Einstellung der

- 2 -

betreffenden Nocken erforderlich macht. Als Mittel zur Einstellung benutzt man Maßstäbe und Nonien, welche eine Genauigkeit von 0,1 mm ermöglichen. Für eine sogenannte mittelfeine Einstellung kann eine Gravur nach der DE-PS 1 525 091 verwendet werden, mit welcher ohne zusätzliche Meßgeräte im Bereich von 0,5 mm eingestellt werden kann.

Ferner sind Feineinstellnocken, beispielsweise eine Ausführung nach der DE-PS 2 365 575, bekannt, mit welcher die Genauigkeit von 0,01 mm erreicht wird. Der Gesamtverstellbereich solcher Feineinstellnocken liegt über 1 mm. In Verbindung mit der mittelfeinen Gravur kann also über den gesamten Weg die Hundertstelmillimeter-Genauigkeit hergestellt werden.

Für das Bedienungspersonal ist es in der Praxis sehr schwierig, derart genaue Werte herzustellen bzw. einzustellen und vor allem abzulesen. Dies gilt insbesondere dann, wenn die gravierten Nutleisten sowie die verstellbaren Nocken an schwer zugänglichen Stellen der Maschinen angeordnet sind, z.B. in großer Höhe oder tief unten am Maschinenbett.

Der Erfindung liegt ferner die Erkenntnis zugrunde, daß man trotz einer bereits in der Steuerung und Steuerungsvorrichtung vorgegebenen Genauigkeit in der Praxis niemals auf Anhieb ein ebenso genaues Werkstück erhalten kann. Werkzeugverschleiß, Temperaturunterschiede,

- 3 -

unterschiedliche Spannkräfte und andere Faktoren führen stets zu Differenzen gegenüber der Maß-Vorgabe. Erst nach einer oder mehreren Probefahrten der Maschine werden diese Differenzen aufgrund des Meßergebnisses am Werkstück durch Nachstellen bzw. Justieren der Steuerung und Steuerungsvorrichtung ausgeglichen. Dies ist bei der Nockensteuerung ebenso erforderlich wie bei allen elektronischen oder lichtelektrischen Steuerungen.

Die auftretenden Differenzen bzw. Maßabweichungen sind meist sehr gering. Sie liegen in der Größenordnung von 1 mm. Ein solcher Differenzbetrag zwischen Maßvorgabe und Meßergebnis am Werkstück kann z.B. durch den oben erwähnten Feineinstellnocken mit einer Genauigkeit von 0,01 mm und sogar feiner ausgeglichen werden.

Der Erfindung liegt nun die Aufgabe zugrunde, einen Grenztaster zu schaffen, welcher dem Bedienungspersonal das Herstellen bzw. Einstellen und Ablesen solcher genauen Werte wesentlich erleichtert.

Die gestellte Aufgabe wird erfindungsgemäß gelöst durch die Maßnahme nach dem Kennzeichen des Anspruches 1. Auf diese Weise ist es möglich, den Meßwertgeber unabhängig von der Lage des betreffenden Nockens so anzuordnen, daß das Be-dienungspersonal die betreffenden Angaben leicht ablesen und so ein genaues Einstellen der Wege-steuerung vornehmen kann. Von Vorteil ist ferner, daß die Maßangaben während der gesamten Fertigung einer Serie von Werkstücken laufend überwacht werden können und somit jederzeit z.B. bei Werkzeugverschleiß, eine entsprechende Nachjustierung unmittelbar an der Maschine durch die Bedienungsperson möglich ist.

Vorteilhafte Ausgestaltungen der Erfindung ergeben sich aus den Unteransprüchen.

In der Zeichnung sind Ausführungsbeispiele der Erfindung im Schema dargestellt, und zwar zeigen:

Figur 1 eine Seitenansicht einer vereinfacht dargestellten Werkzeugmaschine,

Figur 2 eine Teildraufsicht zu Figur 1 in vergrößertem Maßstab,

Figur 3 einen Horizontalschnitt durch einen Grenztaster in vergrößertem Maßstab,

Figur 4 einen Horizontalschnitt durch ein anderes Ausführungsbeispiel eines Grenztasters,

Figur 5 einen Horizontalschnitt durch einen Grenztaster in wiederum anderer Ausgestaltung und

Figur 6 eine Ansicht eines wiederum anders ausgestalteten Grenztasters.

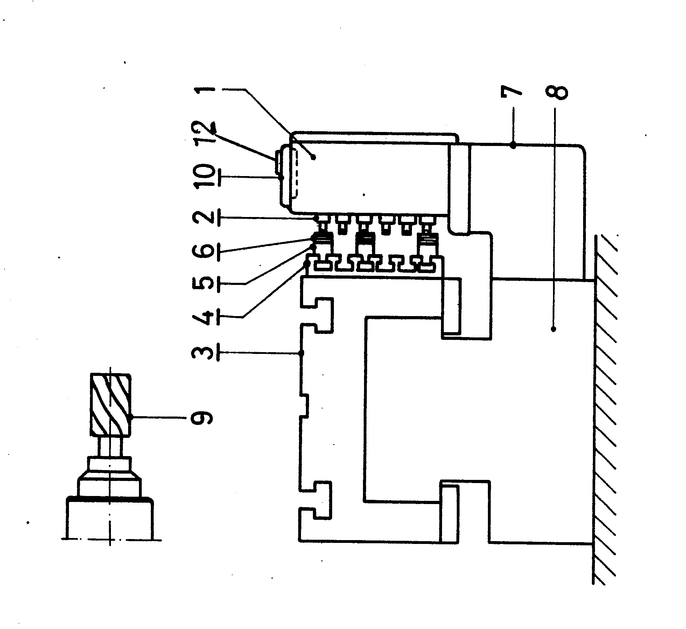

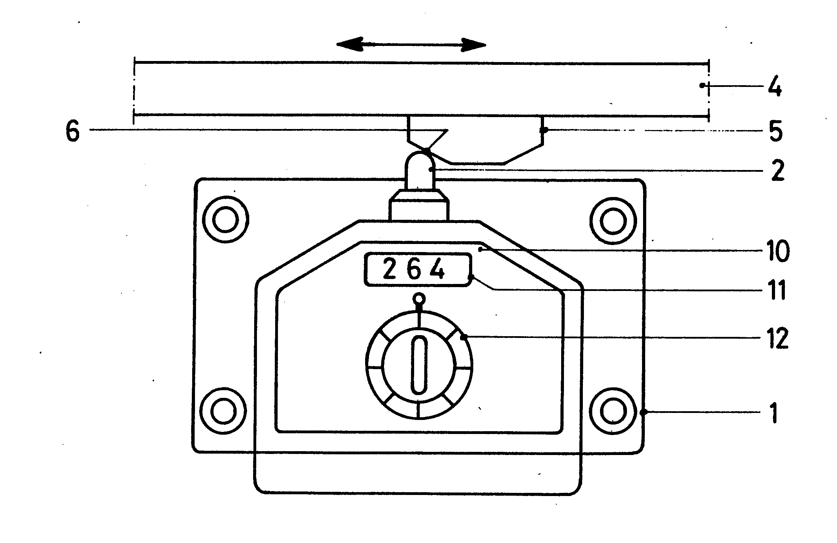

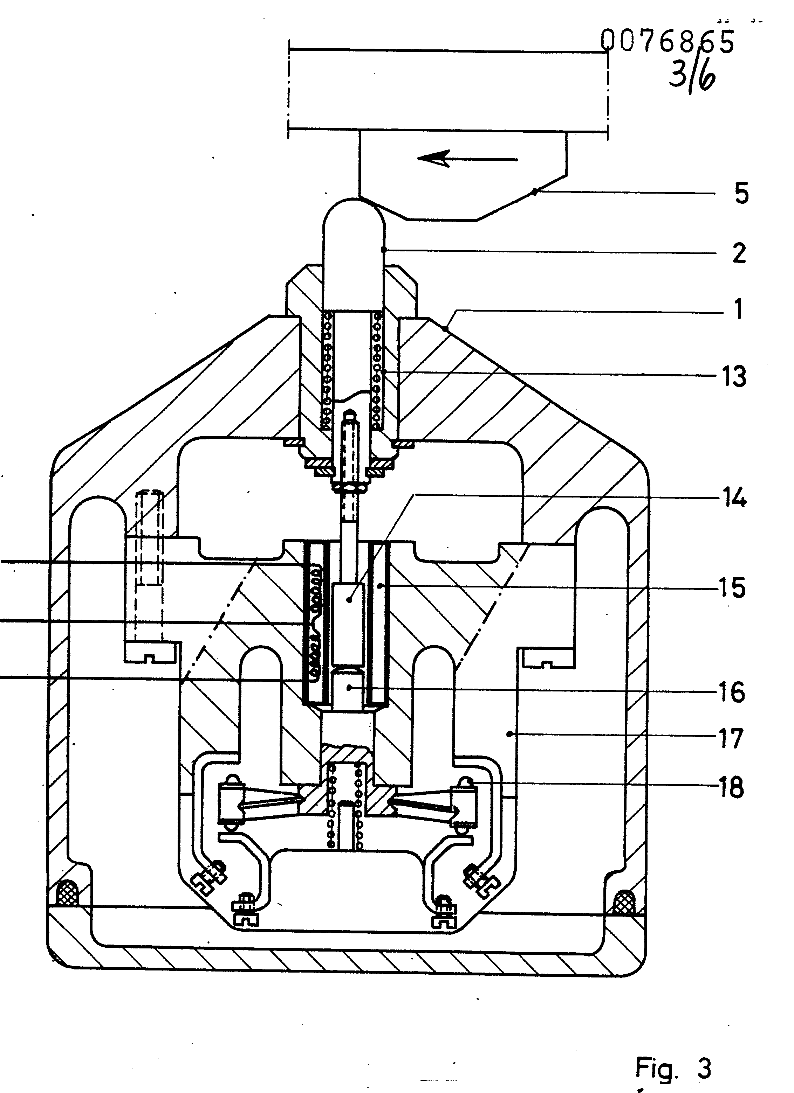

Figur 1 veranschaulicht eine vereinfachte Darstellung einer Werkzeugmaschine, deren Maschinengestell im wesentlichen aus einem Sockel 7 und einem Maschinenbett 8 besteht. Auf dem Maschinenbett 8 ist ein längsbeweglicher, d.h. senkrecht

- 5 -

zur Bildebene der Figur 1 verschiebbarer Maschinenschlitten 3 angeordnet, der eine Mehrfach-Nutleiste 4 mit im vorliegenden Ausführungsbeispiel sechs T-Nuten trägt. In dieser Mehrfach-Nutleiste 4 sind beispielsweise drei Nocken 5 befestigt, die senkrecht zur Bildebene der Figur 1 verstellbar sind. Wie die zugehörigen Figuren 2 und 3 veranschaulichen, besitzen die Nocken 5 eine Schrägfläche 6. Der Maschinenschlitten 3 kann je nach Bedarf und Verwendungszweck nicht gezeichnete Spannvorrichtungen und zu bearbeitende Werkstücke aufnehmen. In Figur 1 ist z.B. über dem Maschinenschlitten ein Fräswerkzeug 9 angeordnet, welches zur Bearbeitung des betreffenden Werkstückes dient. Auf dem Sockel 7 des Maschinengestelles ist eine Reihengrenztastereinheit 1 angeordnet, in welcher eine Reihe von senkrecht übereinander befindlicher Grenztaster in einem gemeinsamen Gehäuse untergebracht ist. Bei dem Ausführungsbeispiel nach Figur 1 sind insgesamt sechs Grenztaster einander zugeordnet, wobei jeder Grenztaster einen Stößel 2 aufweist. Die Anordnung der Reihengrenztastereinheit gegenüber den Nocken 5 ist derart vorgesehen, daß beim Betrieb der Maschine und beim Verschieben des Maschinenschlittens 3 in Richtung des in Figur 3 eingezeichneten Pfeiles die Nocken 5 mit ihrer Schrägfläche 6 an den betreffenden Einsatzstellen, in denen sie befestigt sind, auf die betreffenden Stößel 2 treffen. Dadurch werden die Stößel 2 um einen bestimmten Betrag, welcher zwischen 2 und 5 mm liegen kann, in den Körper der

BAD ORIGINAL

- 6 -

Reihengrenztastereinheit 1 hinein bewegt, wodurch die Wegesteuerungen für das betreffende bewegte Maschinenteil ausgelöst werden.

Figur 2 zeigt in vergrößertem Maßstab eine Draufsicht auf einen Teil der Vorrichtung gemäß Figur 1, und zwar auf die Reihengrenztastereinheit 1, einen Teil der Mehrfach-Nutleiste 4 mit einem Nocken 5, der mit seiner Schrägfläche 6 gerade den Stößel 2 eines Grenztasters berührt. Wie der in Figur 2 eingetragene Pfeil veranschaulicht, kann die Mehrfach-Nutleiste 4 mit dem verstellbar eingesetzten Nocken 5 hin und herbewegt werden. Auf der Reihengrenztastereinheit 1 ist in einer für die Bedienungsperson gut erreichbaren und sichtbaren Stellung eine Geräteplatte 10 mit einer gemeinsamen vorzugsweise elektronischen Digitalanzeigevorrichtung 11 angebracht. In der Digitalanzeigevorrichtung 11 kann beispielsweise eine der bekannten Flüssigkeits-Kristallplatten verwendet werden, wie sie für Digital-Zeitmesser üblich sind. Der Wahlschalter 12 dient dazu, die Anzeige auf den Grenztaster des jeweils betätigten Stößels 2 zu schalten.

Figur 3 zeigt in vergrößerter Darstellung einen Horizontalschnitt durch die Reihengrenztastereinheit 1, und zwar in Höhe eines Stößels 2 eines Grenztasters. Das als längsverschieblicher Stößel 2 ausgebildete Betätigungselement des Grenztasters ist in diesem Ausführungsbeispiel mit einem Anker 14 verbunden. Dieser Anker 14 ist von einem Spulenkörper 15 umgeben, der als induktiver Weggeber ausgebildet und über die dargestellten Anschlußleitungen an einen Spannungsmesser angeschlossen ist. Das von dem Stößel 2 abliegende Ende des Ankers 14 ist mit einem Schaltstößel 16 eines Sprungschaltelementes 17 verbunden.

Die Wirkungsweise ist im wesentlichen folgende. Durch den in Pfeilrichtung bewegten Nocken 5 wird der Stößel 2 gegen die Kraft einer Rückstellfeder 13 in das gemeinsame Gehäuse der Reihengrenztastereinheit 1 hineinbewegt. Dieser Bewegung folgt zwangsläufig der mit dem Stößel 2 über einen Schraubenbolzen verbundene Anker 14. Der Anker 14 verändert hierdurch seine Stellung in dem Spulenkörper 15. Gleichzeitig wird der Schaltstößel 16 eines Sprungschaltelementes 17 betätigt. In einer bestimmten Stellung des Schaltstößels 16 wird über die Kontakte 18 des Sprungschaltelementes 17 eine Schaltung bewirkt. Auf diese Weise erfolgt die Steuerung der Bewegung des betreffenden bewegten Maschinenteiles, gegebenenfalls auch des Antriebes des Werkzeuges. Der als induktiver Weggeber ausgebildete Spulenkörper 15 übersetzt die translatorische Stößelbewegung des Stößels 2 in eine proportionale elektrische Größe, welche z.B. an einem Spannungsmesser ablesbar ist, dessen Skala eine metrische Teilung aufweisen kann.

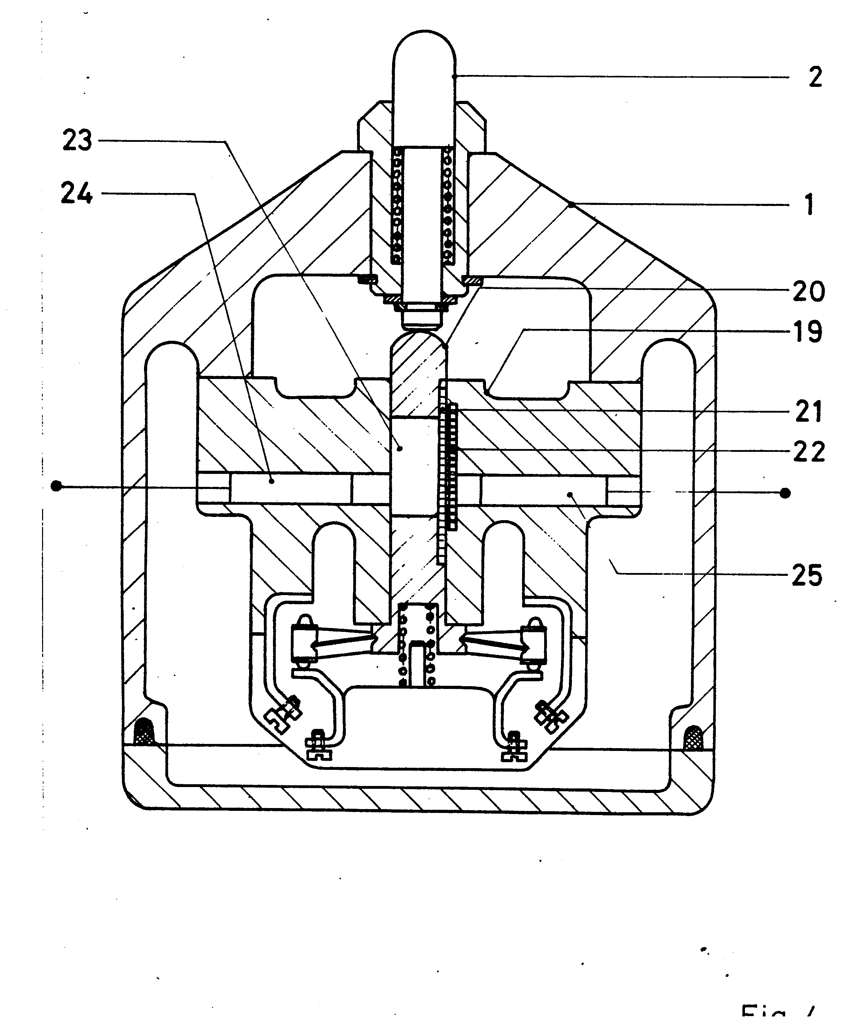

Figur 4 veranschaulicht ein anderes Ausführungsbeispiel eines Grenztasters im Schnitt entsprechend der Figur 3. Auch hier ist das Be-

- 8 -

tätigungselement wieder als längsverschieblicher Stößel 2 ausgebildet, an welchem eine Rückstellfeder 13 entsprechend Figur 3 angreift. Der Stößel wirkt hier unmittelbar mit einem Schaltstößel 20 eines Sprungschaltelementes 19 zusammen. Dieser Schaltstößel 20 weist eine Aussparung 23 für Lichtdurchlaß auf und in ihn ist ein Glasmaßstab 21 eingesetzt. Dem Glasmaßstab 21 gegenüberliegend ist eine feststehende Strichplatte 22 angeordnet. Ferner ist eine Leuchtdiode 24 vorgesehen, die auf einen Fototransistor 25 gerichtet ist. Über nicht gezeichnete elektronische Bausteine kann vorteilhafterweise eine digitale Meßwertablesevorrichtung angeschlossen werden, die wiederum so angeordnet werden kann, daß sie von der betreffenden Bedienungsperson leicht erreichbar und ablesbar ist. Die Wirkungsweise ist hier im wesentlichen folgende. Durch die Strichplatte 22, welche im festen Teil des Schaltereinsatzes angebracht ist, wirft die Leuchtdiode 24 Licht auf den Fototransistor 25 und bewirkt so über elektronische Bausteine eine digitale Meßwertablesung an jeder beliebigen gut zugänglichen Stelle der betreffenden Maschine. Die elektronischen Bausteine sind so eingerichtet, daß sie die Lichtänderung entsprechend der Stellung des Glasmaßstabes 21 gegenüber der Strichplatte 22 auswerten.

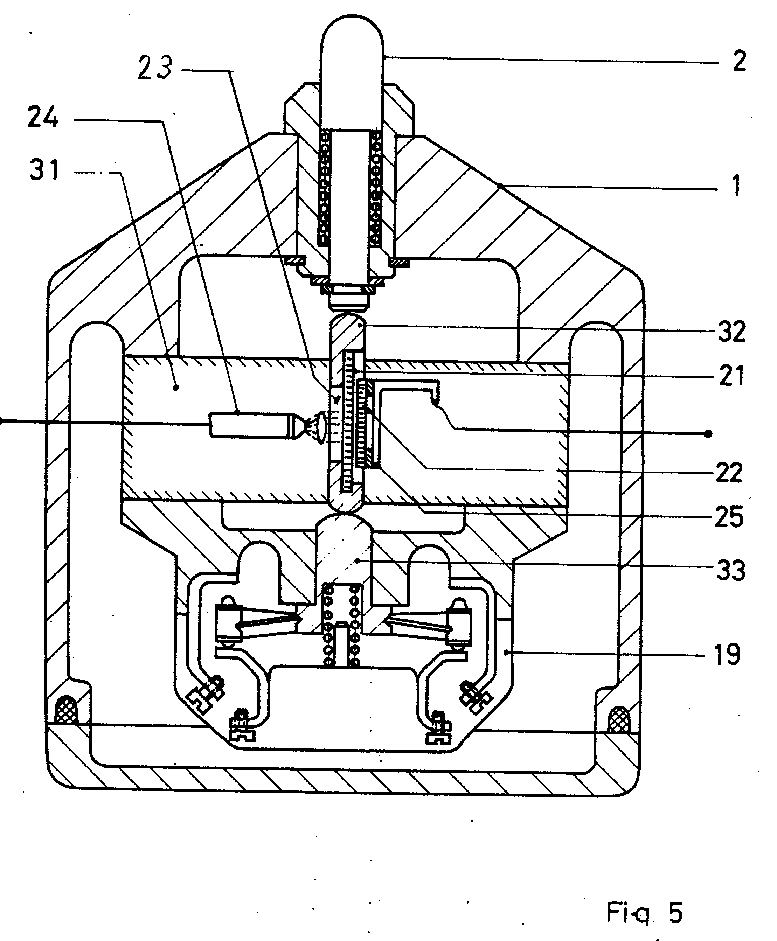

Figur 5 veranschaulicht im Horizontalschnitt entsprechend Figur 3 ein weiteres Ausführungsbeispiel eines Grenztasters, wobei wiederum ein als längsverschieblicher Stößel 2 ausgebildetes

- 9 -

Betätigungselement mit einem Schaltstößel 33 eines Sprungschaltelementes 19 zusammenwirkt. In diesem Falle ist das Sprungschaltelement 19 als Norm-Einsatz nach DIN 43 695 Blatt 2 ausgebildet. Zwischen dem Stößel 2 und dem Sprungschaltelement 19 ist eine Einheit 31 angeordnet, in welcher ein Glasmaßstab 21, eine Strichplatte 22, eine Leuchtdiode 24 und ein Fototransistor 25 untergebracht bzw. zusammengefaßt sind. Die Einheit 31 weist ferner einen längsverschieblichen Verbindungsstößel 32 mit einer Aussparung 23 für Lichtdurchlaß auf. Der Verbindungsstößel 32 ist derart ausgebildet und angeordnet, daß die Bewegung des Stößels 2 auf den Schaltstößel 33 übertragen wird. Der Glasmaßstab 21 ist an dem Verbindungsstößel 32 angebracht. Vorteilhafterweise ist an den Fototransistor 25 ein Digitalzähler bzw. eine Digitalanzeigevorrichtung entsprechend Bezeugszeichen 11 in Figur 2 angeschlossen. Die Wirkungsweise dieses Ausführungsbeispieles des Grenztasters entspricht im wesentlichen der der Figur 4, d.h. durch die Verschiebung des Verbindungsstößels 32 und damit des in ihn eingesetzten Glasmaßstabes 21 gegenüber der Lichtquelle 24 einerseits und dem Strichmaßstab 22 andererseits entsteht eine Lichtänderung. Dieses entstehende "Hell-Dunkel" wird auf den Fototransistor 25 übertragen, der seinerseits diese Impulse auf einen Digitalzähler bzw. eine Digitalanzeigevorrichtung überträgt und damit letztlich die Verschiebebewegung des Stößels 2 zur Anzeige kommt.

- 10 -

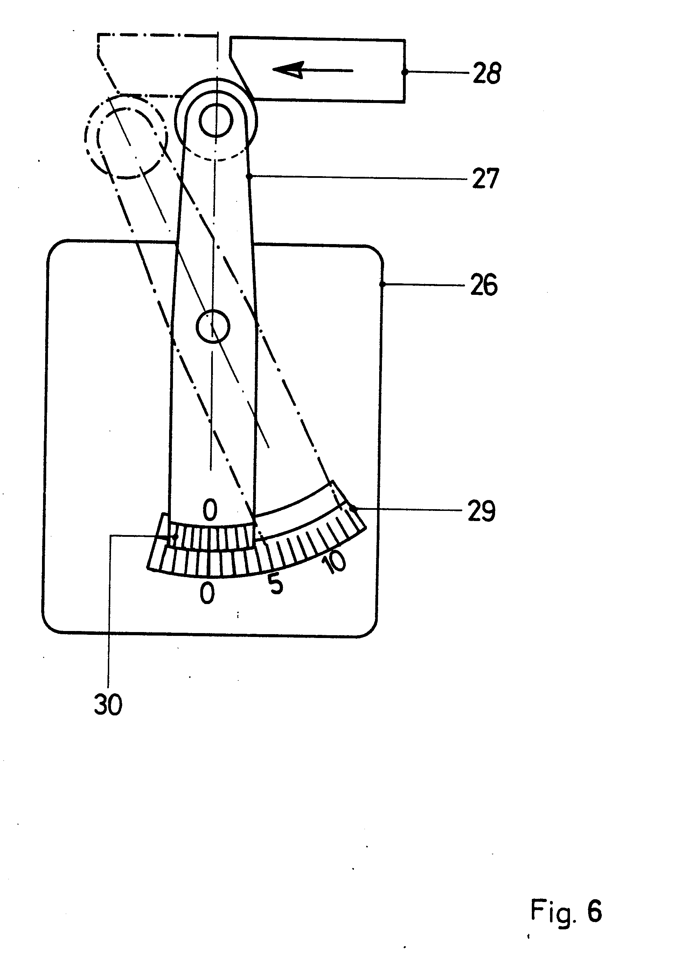

Figur 6 zeigt schließlich noch ein besonders einfaches Ausführungsbeispiel eines Grenztasters.
Das Betätigungselement ist hier als Rollenhebel
27 ausgebildet, welcher an einem Schaltergehäuse
26 derart schwenkbar angeordnet ist, daß er bei
Auftreffen des in Richtung des eingezeichneten
Pfeiles verschobenen Nockens 28 auf die an dem
einen Ende des Rollenhebels 27 angeordnete Rolle
eine Schwenkbewegung in die strichpunktiert eingezeichnete Stellung ausführt. Der Meßwertgeber
besteht in diesem Falle aus einer am Schaltergehäuse befindlichen Strichskala 29 und einem
an dem anderen Hebelende vorgesehenen Nonius 30.
Vorteilhafterweise ist in dem Schaltergehäuse
26 ein nicht gezeichnetes Schaltelement angeordnet, welches in beliebiger Weise ausgeführt
werden kann und welches von dem Rollenhebel 27
betätigbar eingerichtet ist. Das Schaltelement
ist wieder für Schaltfunktionen in bezug auf die
Wegesteuerung des bewegten Maschinenteiles bestimmt. Bei diesem Grenztaster ist die Hebelstellung, in welcher der Schaltvorgang erfolgt
und die Bewegung begrenzt wird, ablesbar. Durch
Vergleich mit dem am Werkstück festgestellten
Maß kann nunmehr eine Korrektur der Nockenstellung vorgenommen werden.

Die obigen Ausführungsbeispiele haben verdeutlicht, daß der Meßwertgeber je nach den Gegebenheiten unterschiedlich ausgebildet sein kann.
Er kann z.B. aus Maßstäben oder Skalen bestehen
oder als Analog-Anzeigevorrichtung mit einem
Spannungsmesser ausgebildet sein. Vorzugsweise

- 11 -

wird eine elektronische Digitalanzeigevorrichtung verwendet. Die Erfindung ist demgemäß nicht auf die zeichnerisch dargestellten und beschriebenen Ausführungsbeispiele beschränkt. So kann z.B. eine Digitalanzeigevorrichtung an jeder beliebigen Stelle der Maschine, z.B. am Bedienungspult oder an einer für das Auge der Bedienungsperson besonders günstigen Stelle angeordnet werden. Es ist ferner eine mechanische Ausführung des Meßwertgebers möglich, wobei über ein von einem Hebel oder Stößel betätigtes, hoch auflösendes Zählwerk angeschlossen ist. Wichtig ist in jedem Falle, daß eine Maßanzeige erfolgt, die eine Korrektur der Stellung des den Schaltvorgang auslösenden Nockens oder eines entsprechenden Elements am bewegten Maschinenteil möglich macht.

Bei dem Ausführungsbeispiel nach Figur 1 wurde die Alternative aufgezeigt, wonach das Betätigungselement und der Meßwertgeber an dem Maschinengestell 7, 8 speziell die Reihengrenztastereinheit 1 auf dem Sockel des Maschinengestelles angeordnet ist, während die Nocken 5 an dem beweglichen Maschinenteil, also an dem Maschinenschlitten 3 mit der Mehrfach-Nutleiste 4 befestigt sind. Statt dessen ist auch die Umkehrung möglich, nämlich daß sich der Grenztaster am bewegten Maschinenteil befindet und der auslösende Nocken feststeht.

Allgemein sei zur Bedienung und Handhabung noch folgendes ausgeführt. Bei einem Grenztaster mit

- 12 -

Stößelbetätigung kann die Maßangabe durch einen mit dem Stößel bewegten elektronischen Maßstab erfolgen, welcher z.B. einen mehrere Millimeter betragenden Stößelweg mißt. Löst man einen Weg von 5 mm in 1000 Einheiten auf, so beträgt die Anzeigegenauigkeit 0,005 mm. Da Nocken nach Vorschriften einer DIN-Norm eine Schrägfläche 6 mit Steigung 1 : 2 besitzen, ist die Nockeneinstellung mit 0,01 mm Genauigkeit möglich. Zweckmäßigerweise löst man den Stößelweg in nur 500 Einheiten auf, damit die Maßangabe der Anzeige mit dem tatsächlichenVerstellweg des Nockens durch entsprechende Bezifferung des Maßstabs übereinstimmend gemacht werden kann.

Bei einer Steuerung durch Nocken und Grenztaster, insbesondere Reihengrenztaster, kann die Erfindung wie folgt in der Praxis angewendet werden:

1. Die Nocken werden mit Hilfe einer mittelfeinen Gravur von 0,5 mm voreingestellt, wobei man eine Sicherheitszugabe vorsieht, um Maßunterschreitungen beim Probe-Werkstück zu vermeiden.

2. Die Probefahrt wird vorgenommen und das Werkstück anschließend gemessen.

3. Die Differenz zum Sollmaß wird an dem Nocken nachgestellt, welcher die Wegbegrenzung vorgenommen hat.

Dieses Nachstellen kann nun in sehr einfacher Weise und mit großer Sicherheit erfolgen, sobald die am Werkstück gemessene Differenz bekannt ist. Es sei einmal beispielsweise angenommen, daß diese Differenz 0,48 mm betragen soll. Wenn nun die von

- 13 -

der Stößelbewegung des Grenztasters ausgehende
Digital- oder Analog-Anzeige irgendein Maß
innerhalb der 5 mm langen Stößelbewegung, beispielsweise 3,69 mm anzeigt, braucht man nur
durch Verschieben des Nockens das Anzeigemaß
auf den betreffenden Wert zu bringen. Um bei
dem vorgegebenen Beispiel den Nocken um die
gemessenen 48 Hundertstel mm zu verstellen, ist
durch Verschieben des Nockens das Anzeigemaß
auf 3,21 mm zu bringen. Wird bei einer Verstellung von nur 45 Hundertstel mm auf das Maß
3,24 eingestellt, so erfolgt der Sicherheit
halber eine zweite Probefahrt, bevor man die
letzten Hundertstel mm nachstellt. Dieses genaue
Einstellen und auch Nachstellen kann, wie oben
bereits angedeutet worden ist, während der
gesamten Fertigung einer Serie von Werkstücken
vorgenommen und dazu die Maße ständig überwacht
werden.

- 1 -

Patentansprüche

1. Grenztaster zur Genaueinstellung von Wegesteuerungen für bewegte Maschinenteile, welcher
ein bewegliches Betätigungselement aufweist,
das mit einem der Wegesteuerung entsprechend
angeordneten Nocken zusammenwirkt,
dadurch gekennzeichnet,
daß das Betätigungselement (2; 27) mit einem
Meßwertgeber verbunden ist.

2. Grenztaster nach Anspruch 1,
dadurch gekennzeichnet, daß der Meßwertgeber
Maßstäbe oder Skalen aufweist.

3. Grenztaster nach Anspruch 1,
dadurch gekennzeichnet,
daß der Meßwertgeber eine Analog-Anzeigevorrichtung mit einem Spannungsmesser aufweist.

4. Grenztaster nach Anspruch 1,
dadurch gekennzeichnet,
daß der Meßwertgeber eine elektronische
Digitalanzeigevorrichtung (11) aufweist.

- 2 -

5. Grenztaster nach einem der vorhergehenden Ansprüche,
dadurch gekennzeichnet,
daß das Betätigungselement und der Meßwertgeber an einem Maschinengestell (7, 8) und
der Nocken (5) an dem beweglichen Maschinenteil (3, 4) befestigt sind.

6. Grenztaster nach einem der Ansprüche 1 bis 4,
dadurch gekennzeichnet,
daß das Betätigungselement und der Meßwertgeber an dem beweglichen Maschinengestell
(3, 4) und der Nocken (5) an einem Maschinengestell (7, 8) befestigt sind.

7. Grenztaster nach einem der vorhergehenden Ansprüche,
gekennzeichnet durch die Zuordnung mit weiteren
Grenztastern zu einer Reihengrenztastereinheit
(1), die in einem gemeinsamen Gehäuse untergebracht ist.

8. Grenztaster nach Anspruch 7,
dadurch gekennzeichnet,
daß an dem Gehäuse ein für alle Grenztaster
gemeinsamer Meßwertgeber (11) angeordnet ist,
und daß ein Wahlschalter (12) vorgesehen ist,
welcher zum Umschalten des Meßwertgebers auf
den jeweiligen Grenztaster eingerichtet ist.

9. Grenztaster nach einem der vorhergehenden Ansprüche,
dadurch gekennzeichnet,

0076865

- 3 -

daß das Betätigungselement als längsverschieblicher Stößel (2) ausgebildet ist,
welcher mit einem Anker (14) verbunden ist,
daß der Anker (14) von einem Spulenkörper
(15) umgeben ist, der als induktiver Weggeber ausgebildet und an einen Spannungsmesser angeschlossen ist.

10. Grenztaster nach Anspruch 9,
dadurch gekennzeichnet,
daß das von dem Stößel (2) abliegende Ende
des Ankers (14) mit dem Schaltstößel (16)
eines Sprungschaltelementes (17) verbunden
ist.

11. Grenztaster nach einem der Ansprüche 1 bis 8,
dadurch gekennzeichnet,
daß das Betätigungselement als längsverschieblicher Stößel (2) ausgebildet ist,
daß der Stößel (2) mit einem Schaltstößel
(20) eines Sprungschaltelementes (19) zusammenwirkt, daß der Schaltstößel (20) eine
Aussparung (23) für Lichtdurchlaß und einen
Glasmaßstab (21) aufweist, daß dem Glasmaßstab (21) gegenüberliegend eine feststehende Strichplatte (22) angeordnet ist,
daß eine Leuchtdiode (24) auf einen Fototransistor (25) gerichtet ist, und daß über
elektronische Bausteine eine digitale Meßwertablesevorrichtung angeschlossen ist.

12. Grenztaster nach einem der Ansprüche 1 bis 8,
dadurch gekennzeichnet,

- 4 -

daß das Betätigungselement als längsverschieblicher Stößel (2) ausgebildet ist, daß
der Stößel (2) mit einem Schaltstößel (33)
eines Sprungschaltelementes (19) zusammenwirkt, daß zwischen dem Stößel (2) und dem
Sprungschaltelement (19) eine Einheit (31)
angeordnet ist, in welcher ein Glasmaßstab
(21), eine Strichplatte (22), eine Leuchtdiode (24) und ein Fototransistor (25) untergebracht sind und welche einen längsverschieblichen Verbindungsstößel (32) mit einer Aussparung (23) für Lichtdurchlaß aufweist, der
derart ausgebildet und angeordnet ist, daß
die Bewegung des Stößels (2) auf den Schaltstößel (33) übertragbar ist, daß der Glasmaßstab (21) an dem Verbindungsstößel (32)
angebracht ist, und daß an den Fototransistor
(25) ein Digitalzähler angeschlossen ist.

13. Grenztaster nach Anspruch 1,
dadurch gekennzeichnet,
daß das Betätigungselement als Rollenhebel
(27) ausgebildet ist, welcher an einem
Schaltergehäuse (26) derart schwenkbar angeordnet ist, daß er bei Auftreffen des
Nockens auf die an dem einen Ende des Rollenhebels (27) angeordnete Rolle eine Schwenkbewegung ausführt, und daß der Meßwertgeber aus
einer am Schaltergehäuse befindlichen Strichskala (29) und einem an dem anderen Hebelende vorgesehenen Nonius (30) besteht.

14. Grenztaster nach Anspruch 13,
    dadurch gekennzeichnet,
    daß in dem Schaltergehäuse (26) ein Schaltelement angeordnet ist, welches von dem
    Rollenhebel (27) betätigbar ist, und daß
    das Schaltelement für Schaltfunktionen in
    bezug auf das bewegte Maschinenteil bestimmt ist.

15. Grenztaster nach einem der Ansprüche 9 bis 12,
    dadurch gekennzeichnet,
    daß an dem Stößel (2) eine Rückstellfeder (13)
    angreift.

0076865

Fig.1

2/6

0076865

Fig.2

007685

3/6

Fig. 3

2

23

24

1

20

19

21

22

25

Fig 4

Fig. 5

0076865

28

27

26

29

0

0    5    10

30

Fig. 6

Europäisches
Patentamt

**EUROPÄISCHER RECHERCHENBERICHT**

0076865
Nummer der Anmeldung

EP 81 10 8074

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US - A - 2 798 910 (DE VLIEG) <br><br> * Spalte 4, Zeilen 67-75; Spalte 5, Zeilen 1-75 und Figuren 8 und 11 * <br><br> -- | 1,2 | B 23 Q 17/16 <br> 21/00 |
| X | GB - A - 1 095 152 (GIDDINGS & LEWIS-FRASER) <br><br> * Seite 1, Zeilen 63-85; Seite 2, Zeilen 1-31 und Figuren 1-5 * <br><br> -- | 5,6 | |
| A | DE - C - 846 924 (MÜLLER) | | |
| A | CH - A - 426 434 (MAHO) | | RECHERCHIERTE SACHGEBIETE (Int. Cl. ³) |
| A | CH - A - 295 163 (OERLIKON) | | B 23 Q 17/00 <br> 21/00 |
| A | DE - B - 1 146 326 (LINDNER) | | |

Der vorliegende Recherchenbericht wurde für alle Patentansprüche erstellt.

| Recherchenort | Abschlußdatum der Recherche | Prüfer |
|---|---|---|
| Den Haag | 16-06-1982 | BOGAERT |